# EUROPEAN PATENT APPLICATION

(11) **EP 4 307 824 A1**
(43) Date of publication of application: **17.01.2024**
(21) Application number: 21930229.6
(22) Date of filing: 12.03.2021
(51) Int. Cl.: H04W 76/10, H04W 76/20

(54) **TERMINAL AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/010176
(87) International publication number: WO 2022/190379

(57) **Abstract**

A terminal includes a control unit that determines a waveform to be applied to communication, based on a condition during initial access, cell switching, or bandwidth part (BWP) switching; and a communication unit that performs transmission or reception by applying the determined waveform.

## Description

### TECHNICAL FIELD

The present invention relates to a terminal and a communication method in a radio communication system.

### BACKGROUND ART

In New Radio (NR) (which is also referred to as "5G") that is a successor system to Long Term Evolution (LTE), a technology that satisfies requirements such as a large-capacity system, a high-speed data transmission rate, low latency, simultaneous connection of a large number of terminals, low cost, and low power consumption has been discussed (see, Non-Patent Document 1, for example).

Further, as a next-generation radio communication system, discussions on 6G have started, and it is expected that radio quality exceeding that of 5G will be achieved. For example, 6G has been discussed in terms of achieving a larger capacity, new frequency bands, lower latency, higher reliability, expansion of communication coverage in new areas (at high altitude, at sea, and in space), and the like (Non-Patent Document 2, for example).

### RELATED-ART DOCUMENTS

### NON-PATENT DOCUMENTS

Non-Patent Document 1: 3GPP TS 38.300 V16.4.0 (2020-12)
Non-Patent Document 2: White Paper 5G Evolution and 6G (2020-01), NTT DOCOMO, INC.

### SUMMARY OF THE INVENTION

### PROBLEM TO BE SOLVED BY THE INVENTION

In 5G, there are a wide range of scenarios or use cases such as enhanced mobile broadband (eMBB) for cellular networks, ultra-reliable and low-latency communications (URLLC) for factory automation, and massive machine-type communications (mMTC) for wearables. In 6G, scenarios or use cases are expected to be more diverse.

Conversely, waveforms used for 5G network radio communications are limited to orthogonal frequency division multiplexing (OFDM)-based waveforms, which may result in lack of flexibility to accommodate scenarios or use cases.

The present invention has been made in view of the above-described points, and enables selection of a waveform to be used according to a communication situation in a radio communication system.

### MEANS TO SOLVE THE PROBLEM

According to the disclosed technology, a terminal includes a control unit that determines a waveform to be applied to communication, based on a condition during initial access, cell switching, or bandwidth part (BWP) switching; and a communication unit that performs transmission or reception by applying the determined waveform.

### EFFECTS OF THE INVENTION

According to the disclosed technology, in a radio communication system, a waveform to be used can be selected according to a communication situation.

### BRIEF DESCRIPTION OF THE DRAWINGS

[FIG. 1] FIG. 1 is a drawing illustrating an example configuration of a radio communication system according to an embodiment of the present invention;
[FIG. 2] FIG. 2 is a drawing illustrating an example of a frequency range according to the embodiment of the present invention;
[FIG. 3] FIG. 3 is a drawing illustrating an example of switching between waveforms according to the embodiment of the present invention;
[FIG. 4] FIG. 4 is a drawing illustrating an example (1) of technical specification changes according to the embodiment of the present invention;
[FIG. 5] FIG. 5 is a drawing illustrating an example (2) of technical specification changes according to the embodiment of the present invention;
[FIG. 6] FIG. 6 is a drawing illustrating an example (3) of technical specification changes according to the embodiment of the present invention;
[FIG. 7] FIG. 7 is a drawing illustrating an example (4) of technical specification changes according to the embodiment of the present invention;
[FIG. 8] FIG. 8 is a drawing illustrating an example (5) of technical specification changes according to the embodiment of the present invention;
[FIG. 9] FIG. 9 is a flowchart illustrating an example of a process of switching between waveforms according to the embodiment of the present invention;
[FIG. 10] FIG. 10 is a drawing illustrating an example of a functional configuration of a base station 10 according to the embodiment of the present invention;
[FIG. 11] FIG. 11 is a drawing illustrating an example of a functional configuration of a terminal 20 according to the embodiment of the present invention; and
[FIG. 12] FIG. 12 is a drawing illustrating a hardware configuration of each of the base station 10 and the terminal 20 according to the embodiment of the present invention.

### MODE FOR CARRYING OUT THE INVENTION

In the following, embodiments of the present invention will be described with reference to the accompanying drawings. The embodiments described below are examples, and embodiments to which the present invention are applied are not limited to the following embodiments.

An existing technology is be used as appropriate when a radio communication system according to the embodiments of the present invention is operated. The existing technology is, for example, LTE; however, the existing technology is not limited to LTE. As used herein, the term "LTE" has a broader meaning including LTE-Advanced and schemes (such as NR) after LTE-Advanced, unless otherwise specified.

Further, in the embodiments of the present invention described below, terms used in the existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) are used. The above terms are used for the convenience of description, and signals, functions, and the like, which are similar to the above terms, may be referred to as different names. In NR, the above-described terms correspond to an NR-SS, an NR-PSS, an NR-SSS, an NR-PBCH, an NR-PRACH, and the like. Note that a signal used in NR is not necessarily referred to as "NR-".

Further, in the embodiments of the present invention, a duplex scheme may be a time division duplex (TDD) scheme, a frequency division duplex (FDD) scheme, or any other scheme (such as flexible duplex).

Further, in the embodiments of the present invention, the expression "a radio parameter or the like is configured" may mean that a predetermined value is preconfigured, or may mean that a radio parameter indicated by a base station 10 or a terminal 20 is configured.

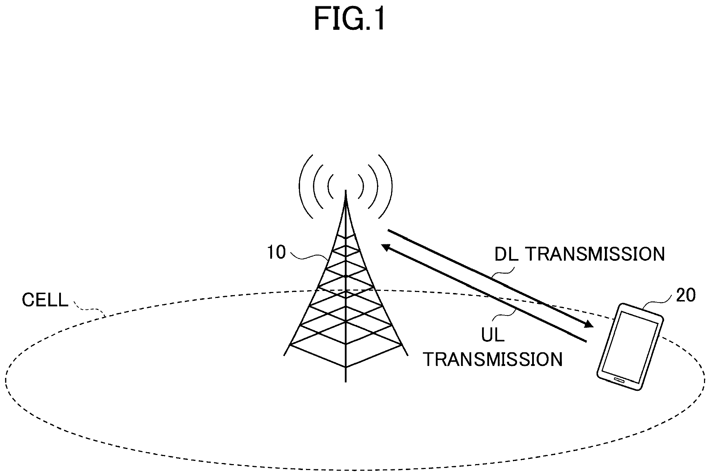

FIG. 1 is a drawing illustrating an example configuration of a radio communication system according to an embodiment of the present invention. As illustrated in FIG. 1, the radio communication system according to the embodiment of the present invention includes the base station 10 and the terminal 20. The one base station 10 and the one terminal 20 illustrated in FIG. 1 are merely examples, and a plurality of base stations 10 and a plurality of terminals 20 may be provided.

The base station 10 is a communication apparatus that provides one or more cells and wirelessly communicates with the terminal 20. Physical resources of a radio signal may be defined in the time domain and the frequency domain, the time domain may be defined by the number of orthogonal frequency division multiplexing (OFDM) symbols, and the frequency domain may be defined by the number of subcarriers or the number of resource blocks. The base station 10 transmits a synchronization signal and system information to the terminal 20. Examples of the synchronization signal include an NR-PSS and an NR-SSS. The system information is transmitted over an NR-PBCH, and is also referred to as broadcast information. The synchronization signal and the system information may be referred to as an SSB (SS/PBCH block). As illustrated in FIG. 1, the base station 10 transmits a control signal or data to the terminal 20 in downlink (DL), and receives a control signal or data from the terminal 20 in uplink (UL). Both the base station 10 and the terminal 20 can perform beamforming to transmit and receive signals. In addition, both the base station 10 and the terminal 20 can apply multiple-input multiple-output (MIMO) based communications to DL or UL. Both the base station 10 and the terminal 20 may perform communications via a secondary cell (SCell) and a primary cell (PCell) using carrier aggregation (CA). Further, the terminal 20 may perform communications via a primary cell of the base station 10 using dual connectivity (DC) and a primary secondary cell group cell (PSCell (Primary SCG Cell)) of another base station 10.

The terminal 20 is a communication apparatus having a radio communication function, such as a smartphone, a mobile phone, a tablet, a wearable terminal, or a machine-to-machine (M2M) communication module. As illustrated in FIG. 1, the terminal 20 uses various communication services provided by the radio communication system, by receiving a control signal or data from the base station 10 in DL and transmitting a control signal or data to the base station 10 in UL. In addition, the terminal 20 receives various reference signals transmitted from the base station 10, and measures channel quality based on results of the reception of the reference signals.

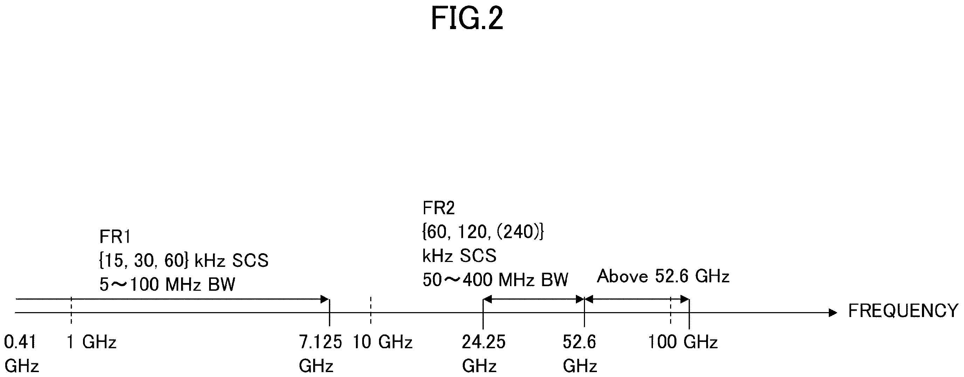

FIG. 2 is a drawing illustrating an example of a frequency range according to the embodiment of the present invention. In the NR technical specifications of 3GPP Release 15 and Release 16, for example, operation in a frequency band of 52.6 GHz and higher has been discussed. As illustrated in FIG. 2, a frequency range (FR) 1 for which the current operation is defined is a frequency band from 410 MHz to 7.125 GHz. In the FR1, a sub-carrier spacing (SCS) is 15, 30, or 60 kHz, and the bandwidth is from 5 MHz to 100 MHz. A FR2 is a frequency band from 24.25 GHz to 52.6 GHz. In the FR2, a SCS is 60, 120, or 240 kHz, and the bandwidth is from 50 MHz to 400 MHz. For example, the newly operated frequency band may be assumed to be from 52.6 GHz to 71 GHz, may be assumed to be from 52.6 GHz to 114.25 GHz, or may include an unlicensed band or a non-license band.

In LTE or NR, waveforms used for radio communications are as follows.

In LTE, cyclic prefix orthogonal frequency division multiplexing (CP-OFDM) is used in DL, and discrete Fourier transform spread OFDM (DFT-S-OFDM) is used in UL.

In NR, CP-OFDM is used in DL and UL, and DFT-S-OFDM is complementarily used in UL.

Further, in other radio access technologies (RATs), non-OFDM single-carrier waveforms are used in, for example, low power wide area (LPWA) RATs. For example, single sideband-suppression carrier modulation (SSB-SC) and (differential-binary phase shift keying (D-BPSK) are used. Further, for example, independent sideband (ISB) and Gaussian frequency sift keying (GFSK) are used.

Further, in conventional cellular systems, code division multiple access (CDMA) is used.

As waveform characteristics, for multi-carriers such as CP-OFDM, there are advantages of high frequency utilization efficiency and non-consecutive carrier allocation in the frequency domain. However, complex implementation is required, and a high peak-to-average power ratio (PAPR) causes a decrease in coverage.

Conversely, for single carriers such as DFT-S-OFDM, simple implementation is possible and a low PAPR can be achieved. However, frequency utilization efficiency is decreased, and only consecutive carrier allocation is possible in the frequency domain.

Here, for example, there are a wide range of scenarios or use cases in 5G, such as enhanced mobile broadband (eMBB) for cellular networks, ultra-reliable and low-latency communications (URLLC) for factory automation, and massive machine type communications (mMTC) for wearables. In 6G, scenarios or use cases are expected to be more diverse. Therefore, it may be necessary to support non-OFDM waveforms in the 6G network.

Suitable waveforms used for radio communications highly depend on scenarios or use cases. For example, multi-carrier waveforms such as CP-OFDM are considered suitable for cellular networks, e.g., eMBB or URLLC. Conversely, for example, single-carrier waveforms such as DFT-S-OFDM are considered suitable for IoT, e.g., mMTC.

As potential support requirements, for example, for initial access, it is assumed that a common or simple waveform is used among all terminals 20. For non-initial access, it is assumed that a suitable waveform dedicated to each of the terminals is selected according to the scenario or the use case. Note that all terminals 20 may be all terminals 20 in a target cell.

Therefore, a waveform to be used for communications may be configurable or changeable as necessary. For example, a waveform to be used may be selected based on predetermined configurations, signaling, or conditions. In addition, when to switch between waveforms, how to switch between the waveforms, conditions to switch between the waveforms, and details of configurations and parameters related to the waveform may be specified.

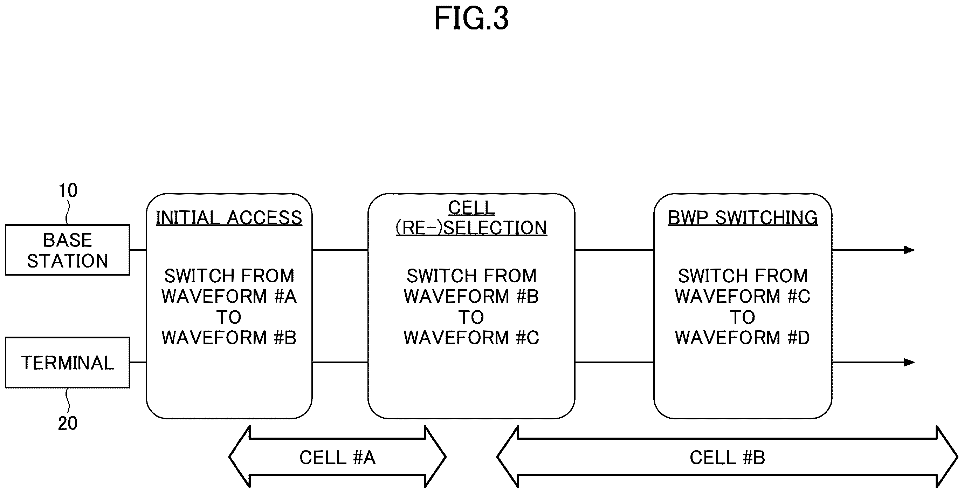

FIG. 3 is a drawing illustrating an example of switching between waveforms according to the embodiment of the present invention. A waveform to be used may be selected as illustrated in FIG. 3. For example, between the base station 10 and the terminal 20, a waveform #A may be used during an initial access procedure in a cell #A, and may be switched to a waveform #B during the initial access procedure. The initial access procedure may be replaced by a procedure for switching from a common waveform to a dedicated waveform. The waveform, for example, the waveform #A in FIG. 3, used before waveform switching during the initial access procedure, may be common among all terminals 20. Note that switching from the waveform #A to the waveform #B may be performed in UL or DL. For example, if the waveform #A is switched to the waveform #B in UL in the terminal 20, the terminal 20 may perform transmission by applying the switched waveform #B. If the waveform #A is switched to the waveform #B in DL in the terminal 20, the terminal 20 may perform reception by applying the switched waveform #B.

As illustrated in FIG. 3, when a cell selection procedure or a cell reselection procedure for moving from a cell #A to a cell #B is performed, the waveform #B may be used in the cell #A and a waveform #C may be used in the cell #B. That is, the waveform may be switched when the cell is changed. Switching from the waveform #B to the waveform #C may be performed in UL or may be performed in DL.

As illustrated in FIG. 3, when the bandwidth part (BWPs) is switched in the cell #B, the waveform may be switched. In a case where the waveform #C is in a given BWP, after the given BWP is switched to another BWP, a waveform #D may be used in the other BWP. That is, switching between the waveforms may be performed even when the cells are not changed. Note that after the initial access, BWP switching and accompanying waveform switching may be performed. Switching from the waveform #C to the waveform #D may be performed in UL or may be performed in DL.

Waveform switching may be performed based on radio resource control (RRC) signaling. For example, the RRC signaling may be a parameter included in a master information block (MIB), a system information block 1 (SIB1), or an SIBx during an initial access procedure, a cell selection procedure, or a cell re-selection procedure. Further, waveform switching may be performed based on medium access control-control element (MAC-CE) signaling. Further, waveform switching may be performed based on downlink control information (DCI) indication. For example, waveform switching may be performed based on DCI scheduling DL or UL transmission. Further, waveform switching may be defined in the technical specifications. Further, waveform switching may be performed by a combination of the above signaling and the technical specifications.

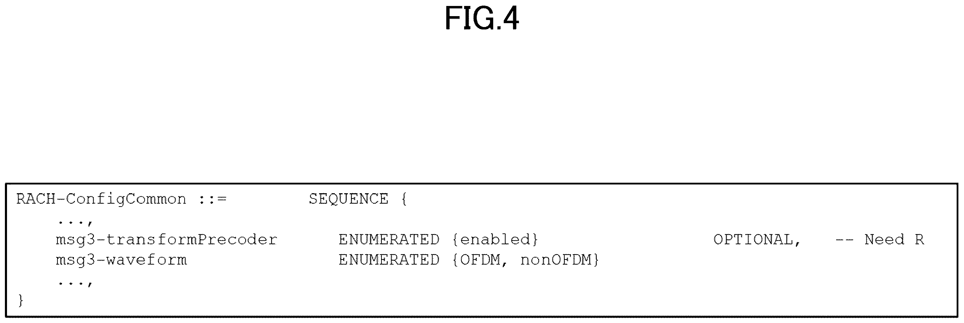

FIG. 4 is a drawing illustrating an example (1) of technical specification changes according to the embodiment of the present invention. For example, the waveform may be switched during initial access based on RRC signaling configuring Msg3 PUSCH as illustrated in FIG. 4. "OFDM" or "nonOFDM" may be configurable in "msg3-waveform" included in the information element "RACH-ConfigCommon".

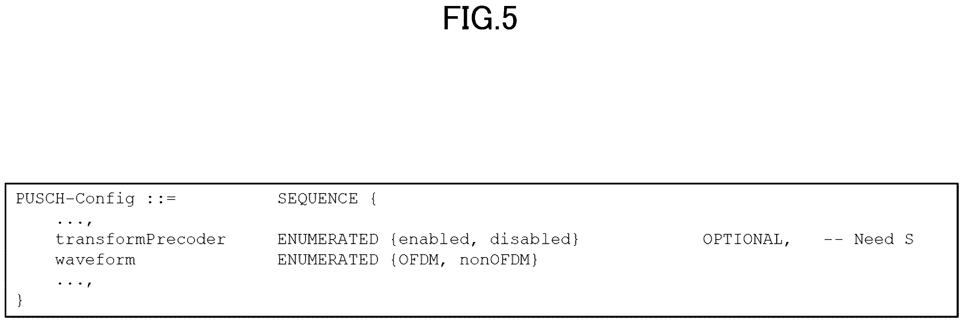

FIG. 5 is a drawing illustrating an example (2) of technical specification changes according to the embodiment of the present invention. For example, when changing the serving cell, the waveform may be switched based on RRC signaling configuring PUSCH as illustrated in FIG. 5. "OFDM" or "nonOFDM" may be configurable in "waveform" included in the information element "PUSCH-Config".

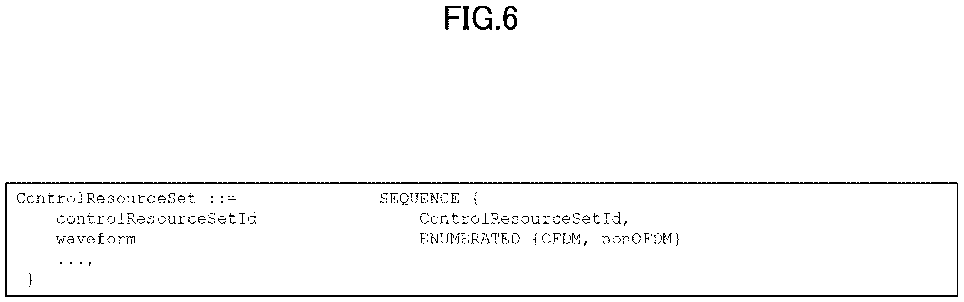

FIG. 6 is a drawing illustrating an example (3) of technical specification changes according to the embodiment of the present invention. For example, when configuring a PDCCH, the waveform may be switched based on RRC signaling configuring a control resource set (CORESET) as illustrated in FIG. 6. "OFDM" or "nonOFDM" may be configurable in "waveform" included in the information element "ControlResourceSet".

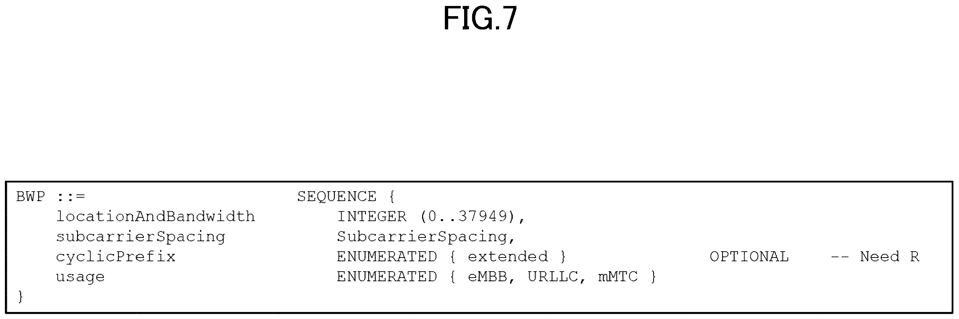

FIG. 7 is a drawing illustrating an example (4) of technical specification changes according to the embodiment of the present invention. For example, when configuring a BWP, the waveform may be switched based RRC signaling configuring the BWP as illustrated in FIG. 7. "eMBB", "URLLC", and "mMTC" each representing the type of data to be transmitted may be configurable in "usage" included in the information element "BWP". A waveform may be determined based on the setting value of the "usage".

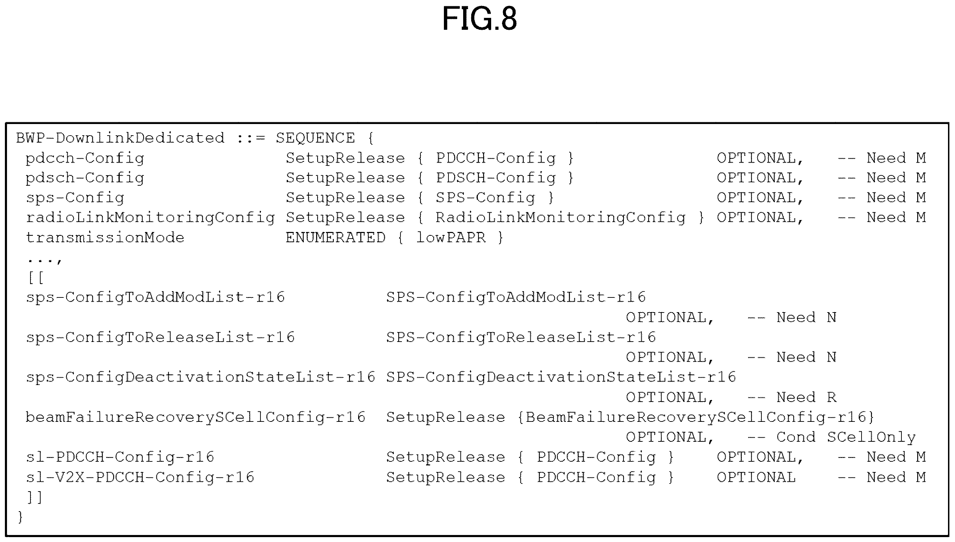

FIG. 8 is a drawing illustrating an example (5) of technical specification changes according to the embodiment of the present invention. For example, when configuring a BWP, the waveform may be switched based on RRC signaling configuring a downlink or an uplink BWP as illustrated in FIG. 8. Whether there is the necessity to achieve a low PAPR in the BWP to be configured may be configurable in "transmissionMode" included in the information element "BWP-DownlinkDedicated". A waveform may be determined based on the setting value of the "transmissionMode".

For example, DCI scheduling UL or DL data may indicate waveforms. For example, information indicating whether waveforms are single-carrier waveforms or multi-carrier waveforms, information indicating whether waveforms are OFDM or non-OFDM, and the like may be indicated by the DCI. In addition, numerologies may be indicated by the DCI, or subcarrier spacings and/or CP lengths may be indicated by the DCI. In addition, as an example, DCI format 0_1/1_1 may have a carrier indicator field, a BWP indicator field, and a waveform indicator field.

As another example, a waveform may be determined based on an BWP indicator instruction included in the DCI format 0_1/1_1 and a table that configures the relationship between BWP indicator setting values and waveforms to be used as indicated in Table 1. In this case, the table may be defined in the technical specifications and may be configured by RRC and MAC.

**[Table 1]**

| BWP indicator | Waveform to be used |
|---|---|
| 00 | Single carrier |
| 01 | Multi carrier |
| 10 | Multi carrier |
| 11 | Multi carrier |

For example, the technical specifications may define that groups or types of singles or channels A) to H) indicated below are each transmitted with a given waveform.
A) DL signals or channels for synchronization and/or essential information (for example, a PSS, a SSS, a PBCH, a MIB, and a SIB1). For example, a single-carrier waveform or a mandatory waveform may be applied to a group or type of the above DL signals or channels.
B) DL signals or channels to be broadcasted (for example, a PDCCH serving as a common search space (CSS)). For example, a single-carrier waveform may be applied to a group or type of the above DL signals or channels.
C) UE-specific DL signals or channels (for example, a PDCCH serving as a UE-specific search space (USS) and its scheduling PDSCH). For example, a multi-carrier waveform such as CP-OFDM may be applied to a group or type of the above UE-specific DL signals or channels.
D) UL/SL signals or channels for random access (for example, a PRACH). For example, a single-carrier waveform or a mandatory waveform may be applied to a group or type of the above UL/SL signals or channels.
E) UL/SL signals or channels carrying control information (for example, a PDCCH serving as a common search space (CSS)). For example, a single-carrier waveform or a mandatory waveform may be applied to a group or type of the above UL/SL signals or channels.
F) UL/SL signals or channels carrying data (for example, a PUSCH and a PSSCH). For example, a multi-carrier waveform such as CP-OFDM may be applied to a group or type of the above UL/SL signals or channels.
G) Signals or channels transmitted before RRC connection establishment. For example, a single-carrier waveform or a mandatory waveform may be applied to a group or type of the above signals or channels.
H) Signals or channels transmitted in a CSS or a USS. For example, a single-carrier waveform or a mandatory waveform may be applied to a group or type of signals or channels transmitted in a CSS. A multi-carrier waveform such as CP-OFDM may be applied to a group or type of signals or channels transmitted in a USS.

Further, for example, waveform switching may be performed as indicated in 1) to 3) below.
1) A plurality of waveforms supported in the technical specifications are specified. Among the supported waveforms, a group #X of one or more waveforms is specified by RRC signaling. Among the waveforms included in the group #X, a waveform that is actually applied for transmission is specified by MAC-CE or DCI.
2) A plurality of waveforms supported in the technical specifications are specified. Among the supported waveforms, a waveform that is actually applied for transmission is specified by MAC-CE or DCI.
3) A plurality of waveforms supported in the technical specifications are specified. Among the supported waveforms, a waveform that is actually applied for transmission is specified by RRC signaling.

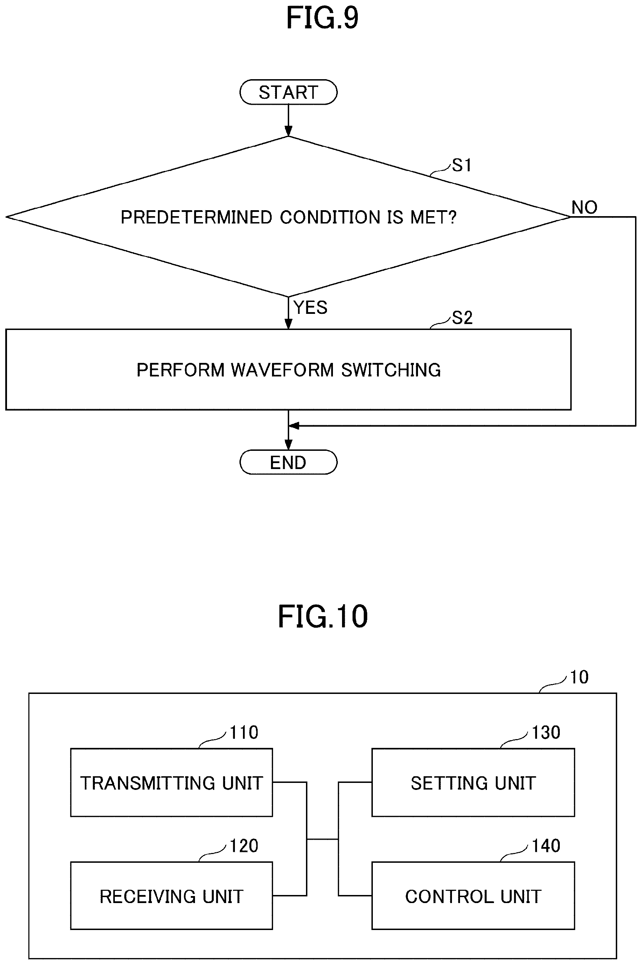

FIG. 9 is a flowchart illustrating an example of a process of switching between waveforms according to the embodiment of the present invention. In step S1, the terminal 20 determines whether a predetermined condition is met. If the predetermined condition is met (YES in S1), the process proceeds to step S2. If the predetermined condition is not met, the process ends. In step S2, the terminal 20 performs waveform switching. Note that the process illustrated in FIG. 9 may be performed by the base station 10 instead of the terminal 20.

The predetermined condition in step S1 may be a condition relating to a UE capability. Examples of the predetermined condition include conditions relating to baseband capabilities such as modulation schemes, MIMO capabilities, and the number of layers. For example, if only single-layer transmission is supported, a single-carrier waveform may be selected. In addition, examples of the predetermined condition include conditions relating to supported band combinations. Further, for example, a new UE capability indicating available waveforms may be defined. For example, the new UE capability may indicate supported waveforms. For example, the new UE capability may indicate that a single-carrier waveform is supported, only DFT-S-OFDM is supported, both a single-carrier waveform and a multi-carrier waveform are supported, and so on.

The predetermined condition in step S1 may be a condition relating to a UE category. For example, a waveform may be selected based on whether the UE belongs to eMBB, URLLC, or mMTC. For eMBB and URLLC devices, both a single-carrier waveform and a multi-carrier waveform may be configured or indicated. For mMTC devices, only a single-carrier waveform may be configured.

The predetermined condition in step S1 may be a condition relating to a frequency. For example, only a single-carrier waveform may be configured if the cell or the BWP is in a higher frequency range than a certain threshold. For example, the certain threshold may be a certain FR (FRx) or a certain frequency (X [GHz]). If the condition relating to a frequency is met, waveform-related configurations may be determined, or waveform-related configurations in RRC/MAC may be restricted. For example, if the cell or the BWP is in a higher frequency range than the certain threshold, OFDM with a larger SCS may be configured.

The predetermined condition in step S1 may be a condition relating to a traffic type. For example, waveform switching may be performed based on whether traffic is periodic traffic, aperiodic traffic, or semi-persistent traffic. Further, for example, waveform switching may be performed based on whether traffic is broadcast traffic, groupcast traffic, or unicast traffic. For example, if traffic is broadcast traffic, a waveform may be switched to a single-carrier waveform. If traffic is groupcast traffic or unicast traffic, a waveform may be switched to a multi-carrier waveform. Further, for example, waveform switching may be performed based on the payload size or type. In the case of a smaller payload, a waveform may be switched to a single-carrier waveform. In the case of a larger payload, a waveform may be switched to a multi-carrier waveform.

The predetermined condition in step S1 may be a condition relating to signals or channels to be transmitted. Further, the predetermined condition in step S1 may be a condition relating to a radio network temporary identifier (RNTI) to be used for transmission. Further, the predetermined condition in step S1 may be a condition relating to a search space (for example, a CSS or a USS). Further, the predetermined condition in step S1 may be a condition relating to an RRC state (for example, RRC_CONNECTED, RRC_INACTIVE, or RRC_IDLE).

Note that the predetermined condition in step S1 may be a condition relating to transmission of signals or channels described in any of A) to H) above, and a waveform described in the corresponding one of A) to H) above may be applied in step S2.

Switching between configurations or parameters related to waveforms may be performed based on the following 1)-4) .
1) Switching between OFDM and non-OFDM may be performed. Examples of the non-OFDM include WCDMA (registered trademark), Time Division-Synchronous Code Division Multiple Access (TD-SCDMA), SSB-SC and D-BPSK, ISB and GFSK, and LoRa (registered trademark) modulation. Examples of the OFDM include CP-OFDM, DFT-S-OFDM, filter bank multicarrier (FBMC), universal filtered OFDM (UF-OFDM), and F-OFDM.
2) A numerology for OFDM may be switched. For example, the SCS may be switched. For example, the CP length may be switched.
3) A spreading factor for CDMA may be switched.
4) Switching between a single carrier and a multi-carrier may be performed.

According to the above-described embodiments, the based station 10 and the terminal 20 can determine when to switch between waveforms, how to switch between the waveforms, conditions to switch between the waveforms, and details of configurations and parameters related to the waveforms.

That is, in the radio communication system, a waveform to be used can be selected according to a communication situation.

### (Device Configuration)

Next, examples of functional configurations of the base station 10 and the terminal 20 that perform the above-described processes and operations will be described. The base station 10 and the terminal 20 include functions to implement the above-described embodiments. However, each of the base station 10 and the terminal 20 may include some of the functions described in the embodiments.

### <Base Station 10>

FIG. 10 is a drawing illustrating an example of a functional configuration of the base station 10 according to the embodiments of the present invention. As illustrated in FIG. 10, the base station 10 includes a transmitting unit 110, a receiving unit 120, a setting unit 130, and a control unit 140. The functional configuration illustrated in FIG. 10 is merely an example. As long as the operations according to the embodiments of the present invention can be performed, any functional classifications and names of functional units may be used.

The transmitting unit 110 includes a function to generate a signal and to wirelessly transmit the signal to the terminal 20. Further, the transmitting unit 110 transmits an inter-network node message to another network node. The receiving unit 120 includes a function to receive various types of signals transmitted from the terminal 20 and to obtain higher layer information from the received signals. In addition, the transmitting unit 110 includes a function to transmit an NR-PSS, an NR-SSS, an NR-PBCH, a DL/UL control signal, and the like, to the terminal 20. The receiving unit 120 receives an inter-network node message from another network node.

The setting unit 130 stores preconfigured configuration information and various types of configuration information to be transmitted to the terminal 20. Contents of the configuration information are, for example, information related to waveform configurations and the like.

The control unit 140 performs control related to waveform configurations as described in the embodiments. Further, the control unit 240 controls LBT. In addition, the control unit 140 performs scheduling. The functional units related to signal transmission in the control unit 140 may be included in the transmitting unit 110, and the functional units related to signal reception in the control unit 140 may be included in the receiving unit 120.

### <Terminal 20>

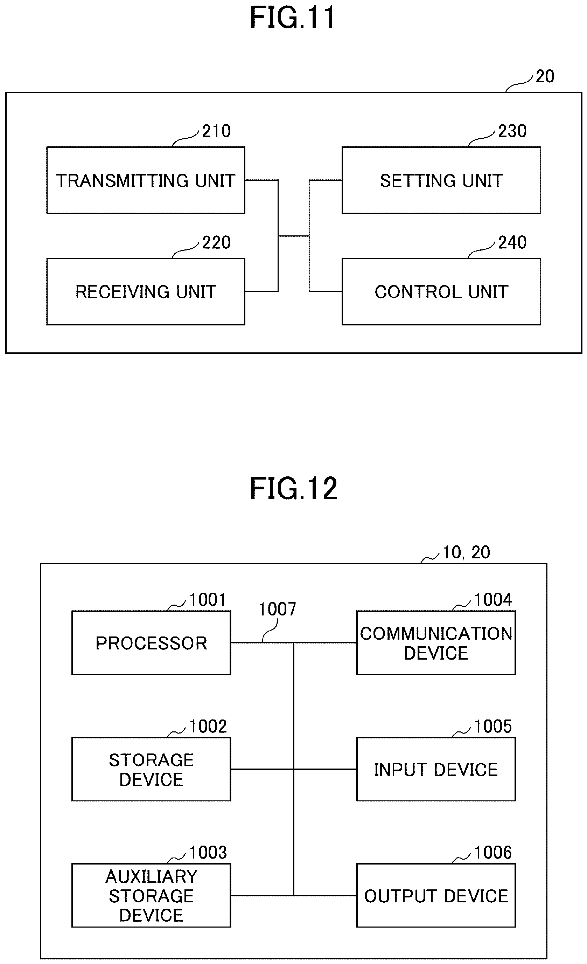

FIG. 11 is a drawing illustrating an example of a functional configuration of the terminal 20 according to the embodiments of the present invention. As illustrated in FIG. 11, the terminal 20 includes a transmitting unit 210, a receiving unit 220, a setting unit 230, and a control unit 240. The functional configuration illustrated in FIG. 11 is merely an example. As long as the operations according to the embodiments of the present invention can be performed, any functional classifications and names of functional units may be used.

The transmitting unit 210 generates a transmission signal from transmission data, and wirelessly transmits the transmission signal. The receiving unit 220 wirelessly receives various types of signals, and obtains higher layer signals from the received physical layer signals. In addition, the receiving unit 220 includes a function to receive an NR-PSS, an NR-SSS, an NR-PBCH, a DL/UL/SL control signal, and the like transmitted from the base station 10. Further, as D2D communication, the transmitting unit 210 transmits a physical sidelink control channel (PSCCH), a physical sidelink shared channel (PSSCH), a physical sidelink discovery channel (PSDCH), a physical sidelink broadcast channel (PSBCH), and the like to another terminal 20, and the receiving unit 220 receives a PSCCH, a PSSCH, a PSDCH, a PSBCH, and the like from the other terminal 20.

The setting unit 230 stores various types of setting information received from the base station 10 via the receiving unit 220. In addition, the setting unit 230 stores preconfigured configuration information. Contents of the configuration information are, for example, information related to waveform configurations and the like.

The control unit 240 performs control related to waveform configurations as described in the embodiments. Further, the control unit 240 controls LBT. The functional units related to signal transmission in the control unit 240 may be included in the transmitting unit 210, and the functional units related to signal reception in the control unit 240 may be included in the receiving unit 220.

### (Hardware Configuration)

The block diagrams (FIG. 10 and FIG. 11) used in the above description of the embodiments illustrate functional unit blocks. These functional blocks (components) are implemented in any combination of hardware and/or software. Further, a method of implementing the functional blocks are not particularly limited. In other words, the functional blocks may be implemented in one physically and/or logically coupled device or in multiple devices where two or more physically and/or logically separated devices are connected directly and/or indirectly (for example, in wired and/or wireless manners). The functional blocks may be implemented by combining software with the above-described one or more devices.

The functions include judging, deciding, determining, computing, calculating, processing, deriving, examining, searching, ascertaining, receiving, transmitting, outputting, accessing, solving, selecting, choosing, establishing, comparing, assuming, expecting, deeming, broadcasting, notifying, communicating, forwarding, configuring, reconfiguring, allocating, mapping, and assigning; however, the functions are not limited thereto. For example, a functional block (component) for transmission is referred to as a transmitting unit or a transmitter. For all the functions, the implementation methods are not particularly limited as described above.

For example, the base station 10 and the terminal 20 according to an embodiment of the present disclosure may function as computers that perform a process of a radio communication method according to the present disclosure. FIG. 12 is a drawing illustrating a hardware configuration of each of the base station 10 and the terminal 20 according to an embodiment of the present disclosure. Each of the above-described base station 10 and the terminal 20 may be physically configured as a computer including a processor 1001, a storage device 1002, an auxiliary storage device 1003, a communication device 1004, an input device 1005, an output device 1006, and a bus 1007.

In the following description, the term "apparatus" can be interchangeably read as a circuit, a device, a unit or the like. The hardware configuration of each of the base station 10 and the terminal 20 may be configured so as to include one or more of the illustrated devices or so as not to include some of the illustrated devices.

The functions of the base station 10 and the terminal 20 are implemented by causing hardware such as the processor 1001 and the storage device 1002 to read predetermined software (a program) so as to allow the processor 1001 to execute arithmetic operations, control communication by the communication device 1004, and control at least one of reading and writing of data from/into the storage device 1002 and the auxiliary storage device 1003.

The processor 1001 controls the entire computer by, for example, running an operating system. The processor 1001 may include a central processing unit (CPU) including an interface with a peripheral device, a control device, an arithmetic device, and a register. For example, each of the above-described control unit 140, the control unit 240, and the like may be implemented by the processor 1001.

Further, the processor 1001 reads out programs (program codes), software modules, and data from at least one of the auxiliary storage device 1003 and the communication device 1004 into the storage device 1002, and executes various processes in accordance therewith. Examples of the programs include a program causing the computer to execute at least a part of operations described in the above embodiments. For example, the control unit 140 of the base station 10 illustrated in FIG. 10 may be stored in the storage device 1002, and may be implemented by a control program executed by the processor 1001. In addition, for example, the control unit 240 of the terminal 20 illustrated in FIG. 11 may be stored in the storage device 1002, and may be implemented by a control program executed by the processor 1001. Although an example in which the above-described various types of processes are performed by the one processor 1001 has been described, the processes may be simultaneously or sequentially performed by two or more processors 1001. The processor 1001 may be implemented by one or more chips. Note that the programs may be transmitted from a network via an electric communication line.

The storage device 1002 is a computer-readable recording medium, and may include at least one of a read-only memory (ROM), an erasable programmable ROM (EPROM), an electrically erasable programmable ROM (EEPROM), and a random-access memory (RAM), for example. The storage device 1002 may be referred to as a register, a cache, or a main memory (a main storage device). The storage device 1002 can store, for example, programs (program codes) and software modules that can be executed to perform the communication method according to an embodiment of the present disclosure.

The auxiliary storage device 1003 is a computer-readable recording medium, and may include at least one of an optical disc such as a compact disc ROM (CD-ROM), a hard disk drive, a flexible disk, a magnetic optical disc (such as a compact disc, a digital versatile disc, and a Blu-ray (registered trademark) disk), a smart card, a flash memory (such as a card, a stick, and a key drive), a floppy (registered trademark) disk, and a magnetic strip. The above-described recording medium may be a database, a server, or any other appropriate medium including at least one of the storage device 1002 and/or the auxiliary storage device 1003.

The communication device 1004 is hardware (a transmitting/receiving device) that performs communication between computers via a wired and/or wireless network, and may be referred to as a network device, a network controller, a network card, or a communication module. The communication device 1004 may include a radio frequency switch, a duplexer, a filter, a frequency synthesizer, and the like, in order to implement at least one of frequency division duplex (FDD) and time division duplex (TDD). For example, a transmitting/receiving antenna, an amplifier unit, a transmitting/receiving unit, a transmission line interface, and the like may be implemented by the communication device 1004. The transmitting/receiving unit may be implemented such that a transmitting unit and a receiving unit are physically or logically separated.

The input device 1005 is an input device (such as a keyboard, a mouse, a microphone, a switch, a button, or a sensor) that receives inputs from the outside. The output device 1006 is an output device (such as a display, a speaker, or a LED ramp) that provides outputs to the outside. Note that the input device 1005 and the output device 1006 may be an integrated device (for example, a touch panel).

Further, the devices such as the processor 1001 and the storage device 1002 are connected with each other via the bus 1007 that communicates information. The bus 1007 may be configured with a single bus or may be configured with different buses between the devices.

Further, each of the base station 10 and the terminal 20 may be configured to include hardware such as a microprocessor, a digital signal processor (DSP), an application-specific integrated circuit (ASIC), a programmable logic device (PLD), and a field-programmable gate array (FPGA), and some or all of the functional blocks may be implemented by the hardware. For example, the processor 1001 may be implemented by at least one of these hardware devices.

### (Summary of Embodiments)

As described above, according to an embodiment of the present invention, a terminal is provided that includes a control unit that determines a waveform to be applied to communication, based on a condition during initial access, cell switching, or bandwidth part (BWP) switching; and a communication unit that performs transmission or reception by applying the determined waveform.

With the above-described configuration, the base station 10 and the terminal 20 can determine when to switch between waveforms, how to switch between the waveforms, conditions to switch between the waveforms, and details of configurations and parameters related to the waveforms. That is, in the radio communication system, the waveform to be used can be selected according to a communication situation.

In a case where the waveform is determined during the initial access, the control unit may switch the waveform from a waveform used in common among all terminals in a cell to a waveform dedicated to each of the terminals. With this configuration, the base station 10 and the terminal 20 can determine when to switch between the waveforms and details of configurations and parameters related to the waveforms.

The condition may include a type of a signal to be transmitted. With this configuration, the base station 10 and the terminal 20 can determine conditions to switch between the waveforms.

The control unit may determine a single-carrier waveform as the waveform to be applied to the communication in a case where a signal to be received is used for synchronization. With this configuration, the base station 10 and the terminal 20 can determine conditions to switch between the waveforms and details of configurations and parameters related to the waveforms.

The control unit may determine a single-carrier waveform as the waveform to be applied to the communication in a case where the signal to be transmitted is used for random access. With this configuration, the base station 10 and the terminal 20 can determine conditions to switch between the waveforms and details of configurations and parameters related to the waveforms.

Further, according an embodiment of the present invention, a communication method performed by a terminal is provided. The communication method includes a control procedure of determining a waveform to be applied to communication, based on a condition during initial access, cell switching, or bandwidth part (BWP) switching; and a communication procedure of performing transmission or reception by applying the determined waveform.

With the above-described configuration, the base station 10 and the terminal 20 can determine when to switch between waveforms, how to switch between the waveforms, conditions to switch between the waveforms, and details of configurations and parameters related to the waveforms. That is, in the radio communication system, the waveform to be used can be selected according to a communication situation.

### (Supplements to Embodiments)

Although the embodiments of the present invention have been described above, the disclosed invention is not limited to the above-described embodiments, and persons skilled in the art will appreciate various modifications, revisions, alternatives, replacements, and the like. Specific examples of numerical values are used in the description in order to facilitate understanding of the present invention. However, these numerical values are merely examples, and any other appropriate values may be used, unless otherwise specified. Classifications of items in the above description are not essential to the present invention. Matters described in two or more items may be combined and used as necessary, and a matter described in one item may be applied to a matter described in another item (as long as there is no contradiction). A boundary between function units or between processing units in the functional block diagrams does not necessarily correspond to a boundary between physical components. The operations of a plurality of functional units may be physically executed by one component, or the operation of one functional unit may be physically executed by a plurality of components. The orders of the procedures described in the embodiments may be changed as long as there is no contradiction. For the convenience of description, the base station 10 and the terminal 20 have been described by using the functional block diagrams; however, such devices may be implemented by hardware, software, or combinations thereof. Each of software executed by the processor included in the base station 10 according to the embodiments of the present invention and software executed by the processor included in the terminal 20 according to the embodiments of the present invention may be stored in a random-access memory (RAM), a flash memory, a read-only memory (ROM), an EPROM, an EEPROM, a register, a hard disk drive (HDD), a removable disk, a CD-ROM, a database, a server, or any other appropriate storage medium.

Notification of information is not limited to the aspects/embodiments described in the present disclosure and may be performed in any other manner. For example, notification of information may be performed by physical layer signaling (for example, downlink control information (DCI) and uplink control information (UCI)), higher layer signaling (for example, radio resource control (RRC) signaling, medium access control (MAC) signaling, broadcast information (master information block (MIB), and system information block (SIB))), any other signal, or a combination thereof. Further, the RRC signaling may be referred to as an RRC message, and may be an RRC connection setup message, an RRC connection reconfiguration message, or the like.

The aspects/embodiments disclosed in the present disclosure may be applied to at least one of systems that utilize Long-Term Evolution (LTE), LTE-Advanced (LTE-A), SUPER 3G, IMT-Advanced, 4th generation mobile communication system (4G), 5th generation mobile communication system (5G), Future Radio Access (FRA), NR (New Radio), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, UWB (ultra-wideband), Bluetooth (registered trademark), and other appropriate systems; and next-generation systems enhanced therefrom. In addition, a plurality of systems may be combined (for example, at least one of LTE and LTE-A may be combined with 5G) and applied.

The orders of procedures, sequences, and flowcharts of the aspects/embodiments described in the present specification may be changed as long as there is no contradiction. For example, the method described in the present specification presents various elements of steps in an exemplary order, and is not limited to a presented specific order.

In the present specification, a specific operation described as being performed by the base station 10 may be performed by its upper node in some cases. In a network including one or more network nodes including the base station 10, it is apparent that various operations performed for communication with the terminal 20 may be performed by at least one of the base station 10 and network nodes (including, but not limited to a mobility management entity (MME) and a serving-gateway (S-GW)) other than the base station 10. In the above, a case in which there is one network node other than the base station 10 has been exemplified; however, the other node may be a combination of a plurality of other network nodes (for example, an MME and an S-GW).

Information, a signal, or the like may be output from a higher layer (or a lower layer) to a lower layer (or a higher layer). Information, signals, or the like may be input/output via a plurality of network nodes. The information, the signal, or the like may be input and output via a plurality of network nodes.

Input/output information and the like may be stored in a specific location (for example, a memory), or may be managed by using a management table. The input/output information and the like may be overwritten, updated, or appended. The output information and the like may be deleted. The input information and the like may be transmitted to another apparatus.

According to the present disclosure, the determination may be made by a value (0 or 1) represented by one bit, may be made by a Boolean value (Boolean: true or false), or may be made by comparison of numerical values (comparison with a predetermined value, for example).

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like, regardless of whether the software is referred to as software, firmware, middleware, microcode, hardware description language, or any other name.

Furthermore, software, instructions, information, and the like may be transmitted and received via a transmission medium. For example, when software is transmitted from a website, a server, or any other remote source, by using at least one of a wired technology (such as a coaxial cable, a fiber optic cable, a twisted pair, or a digital subscriber line (DSL)) and a wireless technology (such as infrared or microwaves), the at least one of wired technology and the wireless technology is included within the definition of the transmission medium.

Information, signals, and the like described in the present disclosure may be represented by using any of various different techniques. For example, data, instructions, commands, information, signals, bits, symbols, chips, and the like that may be referred to throughout the above description may be represented by voltages, currents, electromagnetic waves, magnetic fields, magnetic particles, optical fields, photons, or any combination thereof.

Terms described in the present disclosure and terms necessary to understand the present disclosure may be replaced with terms having the same or similar meanings. For example, at least one of a channel and a symbol may be a signal (signaling). In addition, a signal may be a message. Further, a component carrier (CC) may be referred to as a carrier frequency, a cell, a frequency carrier, or the like.

The terms "system" and "network" used in the present disclosure are used interchangeably.

Further, information, parameters, and the like described in the present disclosure may be represented by using absolute values, may be represented by using relative values from predetermined values, or may be represented by using other corresponding information. For example, a radio resource may be specified by an index.

Names used for the above-described parameters are not limited in any respect. Further, there may be a case where formulas using these parameters may be different from those explicitly disclosed in the present disclosure. Various channels (such as a PUCCH and a PDCCH) and information elements can be identified by any suitable names, and thus, names assigned to these various channels and information elements are not limited in any respect.

In the present disclosure, the terms "base station (BS)", "radio base station", "base station apparatus", "fixed Station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. The base station may be referred to as a macro cell, a small cell, a femtocell, a picocell, or any other term.

The base station can accommodate one or more (for example, three) cells. If the base station accommodates a plurality of cells, the entire coverage area of the base station can be partitioned into a plurality of small areas, and each of the small areas can provide a communication service through a base station subsystem (for example, a small indoor base station (a remote radio head (RRH)). The term "cell" or "sector" refers to a part of or the entirety of the coverage area of at least one of the base station and the base station subsystem providing a communication service in the coverage.

In the present disclosure, the terms "mobile station (MS)", "user terminal", "user equipment (UE)", "terminal", and the like may be used interchangeably.

A mobile station may be referred to by those skilled in the art as a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmitting device, a receiving device, a communication device, or the like. At least one of the base station and the mobile station may be a device mounted on a mobile body, the moving body itself, or the like. The moving body may be a vehicle (such as a car or an airplane, for example), a moving body that moves unmanned (such as a drone or an autonomous vehicle, for example), or a robot (manned or unmanned). At least one of the base station and the mobile station also includes a device that does not necessarily move during communication operations. For example, at least one of the base station and the mobile station may be an Internet of Things (IoT) device such as a sensor.

Further, the base station in the present disclosure may be replaced with a user terminal. For example, each aspect/embodiment of the present disclosure may be applied to a configuration such that communication between the base station and the user terminal is replaced with communication between a plurality of terminals 20 (which may be referred to as device-to-device (D2D) communication, vehicle-to-everything (V2X) communication, or the like). In this case, the functions of the above-described base station 10 may be included in the terminal 20. Additionally, the terms such as "uplink" and "downlink" may be replaced with terms corresponding to inter-terminal communication (for example, "side"). For example, an uplink channel, a downlink channel may be replaced with a side channel.

Similarly, the user terminal in the present disclosure may be replaced with the base station. In this case, the functions included in the above-described user terminal may be included in the base station.

As used herein, the terms "determining" and "deciding" may include various types of operations. For example, the terms "determining" and "deciding" may include "determining" and "deciding" that judging, calculating, computing, processing, deriving, investigating, looking up, searching, or inquiring (e.g., looking up a table, a database, or any other data structure), or ascertaining is considered to be performed. Further, the terms "determining" and "deciding" may include "determining" and "deciding" that receiving (e.g., receiving information), transmitting (e.g., transmitting information), inputting, outputting, or accessing (e.g., accessing data in a memory) is considered to be performed. Furthermore, the terms "determining" and "deciding" may include "determining" and "deciding" that resolving, selecting, choosing, establishing, comparing, or the like is considered to be performed. That is, the terms "determining" and "deciding" may include deeming that some operation is "determined" and "decided". Further, "determining (deciding)" may be replaced with "assuming", "expecting", "considering", or the like.

The terms "connected", "coupled", or any variation thereof mean any direct or indirect connection or coupling between two or more elements, and may include the presence of one or more intermediate elements between the two elements "connected" or "coupled" to each other. The coupling or connection between the elements may be physical, logical, or a combination thereof. For example, "connected" may be replaced with "access". As used herein, two elements can be considered to be mutually "connected" or "coupled" by using at least one of one or more wires, cables, and printed electrical connections, and, as some non-limiting and non-inclusive examples, by using electromagnetic energy such as electromagnetic energy with a wavelength in a radio frequency range, a microwave range, and an optical range (both visible and invisible).

A reference signal may be abbreviated as RS, and may be referred to as a pilot according to applicable standards.

As used herein, the term "based on" does not mean "based only on", unless otherwise specified. In other words, the term "based on" means both "based only on" and "based at least on".

Any reference to elements that use terms such as "first" and "second" used in the present disclosure does not generally limit the amount or order of these elements. These terms can be used in the present disclosure as a convenient way to distinguish between two or more elements. Accordingly, the reference to the first and second elements does not mean that only two elements can be employed, or does not mean that the first element must precede the second element in some manner.

The term "means" used in the configuration of each apparatus described above may be replaced with "unit", "circuit", "device", or the like.

As long as the terms "include", "including", and any variation thereof are used in the present disclosure, these terms are intended to be inclusive similar to the term "comprising". Further, the term "or" used in the present disclosure is intended not to be "exclusive or".

A radio frame may include one or more frames in a time domain. In the time domain, the one or more frames may be referred to as subframes. Each of the subframes may further include one or more slots in the time domain. Further, a subframe may be a fixed time length (e.g., 1 ms) that does not depend on a numerology.

The numerology may be a communication parameter to be applied to at least one of transmission or reception of a signal or a channel. The numerology may represent, for example, at least one of subcarrier spacing (SCS), a bandwidth, a symbol length, a cyclic prefix length, a transmission time interval (TTI), a symbol number per TTI, a radio frame configuration, a specific filtering process performed by a transmitter/receiver in the frequency domain, and a specific windowing process performed by a transmitter/receiver in the time domain.

A slot may be configured with one or more symbols (such as orthogonal frequency division multiplexing (OFDM) symbols or single carrier frequency division multiple access (SC-FDMA) symbols) in a time domain. A slot may be a unit of time based on the numerology.

A slot may include a plurality of mini-slots. Each of the mini-slots may be configured with one or more symbols in the time domain. A mini-slot may be referred to as a sub-slot. A mini-slot may be configured with fewer symbols than a slot. A PDSCH (or PUSCH) transmitted in a unit of time that is greater than a mini-slot may be referred to as a "PDSCH (or PUSCH) mapping type A". A PDSCH (or PUSCH) transmitted using a mini-slot may be referred to as "PDSCH (or PUSCH) mapping type B".

A radio frame, a subframe, a slot, a mini-slot, and a symbol each represent a time unit for transmitting a signal. The radio frame, the subframe, the slot, the mini-slot, and the symbol may be referred to by respective different names.

For example, one subframe may be referred to as a transmission time interval (TTI), a plurality of consecutive subframes may be referred to as a TTI, or one slot or one mini-slot may be referred to as a TTI. That is, at least one of a subframe and a TTI may be a subframe (1 ms) in the existing LTE, may be a time interval shorter than 1 ms (e.g., 1 to 13 symbols), or a time interval longer than 1 ms. Note that the unit representing a TTI may be referred to as a slot, a mini-slot, or the like, instead of a subframe.

For example, a TTI refers to the minimum time unit for scheduling in radio communication. For example, in the LTE system, the base station performs scheduling for allocating radio resources (such as a frequency bandwidth and transmission power that can be used in each terminal 20) in units of TTIs to each terminal 20. Note that the definition of "TTI" is not limited to the above.

A TTI may be a transmission time unit, such as a channel-coded data packet (transport block), a code block, or a code word, or may be a processing unit such as scheduling or link adaptation. When a TTI is provided, a time interval (e.g., a symbol number) to which a transport block, a code block, or a code word is actually mapped may be shorter than the TTI.

Note that, when one slot or one mini-slot is referred to as a TTI, one or more TTIs (i.e., one or more slots or one or more mini-slots) may be the minimum time unit for scheduling. Additionally, the number of slots (the number of mini-slots) forming the minimum time unit for scheduling may be controlled.

A TTI with a time length of 1 ms may be referred to as an ordinary TTI (a TTI in LTE Rel. 8-12), a normal TTI, a long TTI, an ordinary subframe, a normal subframe, a long subframe, a slot, or the like. A TTI that is shorter than a normal TTI may be referred to as a shortened TTI, a short TTI, a partial TTI (or a fractional TTI), a shortened subframe, a short subframe, a mini-slot, a sub-slot, a slot, or the like.

Note that a long TTI (e.g., a normal TTI, a subframe, or the like) may be replaced with a TTI with a time length exceeding 1 ms, and a short TTI (e.g., a shortened TTI or the like) may be replaced with a TTI with a TTI length that is less than the TTI length of the long TTI and greater than or equal to 1 ms.

A resource block (RB) is a resource allocation unit in the time domain and the frequency domain, and may include one or more consecutive subcarriers in the frequency domain. The number of subcarriers included in an RB may be the same, irrespective of the numerology, and may be 12, for example. The number of subcarriers included in an RB may be determined based on the numerology.

Further, the time domain of an RB may include one or more symbols, and may have a length of one slot, one mini-slot, one subframe, or one TTI. Each of one TTI, one subframe, or the like may be configured with one or more resource blocks.

Note that one or more RBs may be referred to as physical resource blocks (PRBs), subcarrier groups (SCGs), resource element groups (REGs), PRB pairs, RB pairs, or the like.

Further, a resource block may be configured with one or more resource elements (REs). For example, one RE may be a radio resource area of one subcarrier and one symbol.

A bandwidth part (BWP) (which may also be referred to as a partial bandwidth, for example) may represent, in a certain carrier, a subset of consecutive common resource blocks (common RBs) for a certain numerology. Here, the common RB may be specified by an index of an RB when a common reference point of the carrier is used as reference. A PRB may be defined in a BWP, and may be numbered in the BWP.

A BWP may include a BWP for UL (UL BWP) and a BWP for DL (DL BWP). For the UE, one or more BWPs may be configured in one carrier.

At least one of configured BWPs may be active, and the UE is not required to assume that a predetermined signal/channel is transmitted/received outside the active BWP(s). Note that a "cell", a "carrier", or the like in the present disclosure may be replaced with a "BWP".

The structures of the above-described radio frame, subframe, slot, mini-slot, symbol, and the like are merely examples. For example, the following configurations can be variously changed: the number of subframes included in a radio frame; the number of slots per subframe or per radio frame; the number of mini-slots included in a slot; the number of symbols and RBs included in a slot or mini-slot; the number of subcarriers included in an RB; and the number of symbols, the symbol length, the cyclic prefix (CP) length, and the like within a TTI.

In the present disclosure, for example, if articles such as "a", "an", and "the" in English are added by a translation, the present disclosure may include a case in which nouns following the articles may be plural.

In the present disclosure, the phrase "A and B are different" may mean that "A and B are different from each other". Note that the phrase "A and B are different" may also mean "each of A and B is different from C." The terms such as "separated" and "coupled" may also be interpreted similarly.

The aspects/embodiments described in the present disclosure may be used alone, may be used in combination, or may be switched in accordance with execution. Furthermore, notification of predetermined information (e.g., notification of "being X") is not limited to notification that is made explicitly, and the notification may be made implicitly (by not sending notification of the predetermined information, for example).

Although the present disclosure has been described in detail, it will be readily apparent to those skilled in the art that the present disclosure is not limited to the embodiments described in the present disclosure. The present disclosure can be implemented as modified and changed aspects without departing from the gist and scope of the present disclosure as set forth in claims. Accordingly, the description of the present disclosure is for illustrative purposes and does not have any restrictive meaning to the present disclosure.

### DESCRIPTION OF THE REFERENCE NUMERALS

10 base station
110 transmitting unit
120 receiving unit
130 setting unit
140 control unit
20 terminal
210 transmitting unit
220 receiving unit
230 setting unit
240 control unit
1001 processor
1002 storage device
1003 auxiliary storage device
1004 communication device
1005 input device
1006 output device

## Claims

1. A terminal comprising:
a control unit that determines a waveform to be applied to communication, based on a condition during initial access, cell switching, or bandwidth part (BWP) switching; and
a communication unit that performs transmission or reception by applying the determined waveform.

2. The terminal according to claim 1, wherein, in a case where the waveform is determined during the initial access, the control unit switches the waveform from a waveform used in common among all terminals in a cell to a waveform dedicated to each of the terminals.

3. The terminal according to claim 1, wherein the condition includes a type of a signal to be transmitted.

4. The terminal according to claim 3, wherein the control unit determines a single-carrier waveform as the waveform to be applied to the communication in a case where a signal to be received is used for synchronization.

5. The terminal according to claim 3, wherein the control unit determines a single-carrier waveform as the waveform to be applied to the communication in a case where the signal to be transmitted is used for random access.

6. A communication method performed by a terminal, the communication method comprising:
a control procedure of determining a waveform to be applied to communication, based on a condition during initial access, cell switching, or bandwidth part (BWP) switching; and
a communication procedure of performing transmission or reception by applying the determined waveform.
